# EUROPEAN PATENT SPECIFICATION

(11) **EP 1 975 787 B1**
(45) Date of publication and mention of the grant of the patent: **12.01.2011**
(21) Application number: 07105321.9
(22) Date of filing: 30.03.2007
(51) Int. Cl.: G06F 9/445, G06F 9/32, G06F 11/00

(54) **A method, a computer program, a computer readable medium, and a computer**
Verfahren, Computerprogramm, computerlesbares Medium und Computer
Procédé, programme informatique et support informatique lisible, et ordinateur

(43) Date of publication of application: 01.10.2008
(73) Proprietor: ZealCore Embedded Solutions AB, 722 15 Västerås (SE)
(72) Inventor: Thane, Henrik, 723 35, Västerås (SE); Ekman, Mathias, SE-640 45 Kvicksund (SE)
(74) Representative: Reyier, Ann-Mari

(56) References cited:
- WO-A-01/06798
- US-A- 5 781 776
- US-A1- 2003 005 409
- US-A1- 2004 107 416
- US-A1- 2006 005 171

## Description

### FIELD OF THE INVENTION

The present invention relates to a method of controlling a computer. In particular the invention relates to a method of controlling the execution of a computer program on the computer. The invention also relates to a computer control program, a computer readable medium, and a computer.

### PRIOR ART

Computer programs are usually created in a high-level language and are thereafter compiled into machine code that is readable and executable by a computer. A computer program sold to a customer is commonly provided in machine code form only. In the event that the program is to be upgraded into a better version, or in the event that there is an error with the computer program, it is necessary to change the entire, or parts of, the machine code constituting the computer program. In order to expedite the change it is common to perform a process known as patching of the old computer program. When patching an old computer program the parts of the program that are to be changed are identified and are then replaced with new machine code. Thus it is not necessary to change the entire program, giving the advantages of less time consumption and a smaller file to transfer to the customer, making it possible to transfer the file for example across the Internet.

Patching of the old computer program cannot take place while the program is being executed. One reason for this is that the patching process may change a machine code instruction so that it is no longer executable until the patching process is complete. Another reason is that the patching process may change a machine code instruction, so that it no longer fit the rest of the program until the entire patching process is complete. If the execution then reaches this machine code instruction before the patching is completed the execution of the program will fail and the computer system may crash. Yet a third reason is that the size of the program may change during the patching, which may lead to uncontrolled jumps in the program that may cause errors or lead to a system crash. These and other problems has led to that patching can only be performed on a program while it is inactive.

Many programs, for example control programs controlling industrial processes, such as robot programs, chemical processing control programs, manufacturing control programs, and other real-time programs, are of such nature that it is very expensive, and in some cases even dangerous, to shut them down. Hence it is expensive, and in some cases not even possible, to upgrade the programs into new versions. The inability of upgrading the programs may lead to production errors, communication errors and non-optimized performance.

Another problem lies in the field of debugging a real-time system, since the real-time system may enter a state, which may not be readily reproduced. It is therefore not possible to re-compile the program with statements for extracting information and re-running the program, since the same state would not be likely to re-occur.

WO 01/06798 A, US 20041107416 A1, US 2003/005409 A1 and US-A-5781776 disclose methods and systems for upgrading a computer program on a continuously running system, wherein an upgrade is stored in the system and activated by means of a jump instruction.

US 2006/005171 A1 discloses a method for replacing machine code instruction on a call stack.

### SUMMARY OF THE INVENTION

One object of the present invention is to advice a way to modify the machine code of a computer program while the computer program is being executed on a computer.

According to a first aspect of the invention this object is achieved with the method according to claim 1. According to a second aspect this object is achieved with the computer according to claim 13.

According to the invention a computer adapted to execute a computer program comprising machine code instructions, comprises a computer processor, having at least one processor core and each processor core being adapted to execute a respective machine code instruction per processing cycle, an internal memory register adapted to store the machine code instructions and to be in communication with the computer processor, and a computer clock adapted to generate a clock signal for controlling the computer processor. The computer is controlled to execute a sequence of the machine code instructions of the computer program by, for each processor core and each processing cycle:
- indicating with a program counter a machine code instruction to be executed,
- receiving a clock signal from said computer clock,
- executing the indicated machine code instruction upon reception of the clock signal, and
- modifying the program counter to identify the next machine code instruction in the sequence of machine code instructions, that is to be executed.

In order to be able to modify the computer program while the program is being executed by the computer the invention comprises
- receiving a notice identifying at least one part of the sequence of machine code instructions that is to be changed, and
- changing the identified part of the sequence of machine code instructions, in between the execution of two consecutive machine code instructions of the sequence of machine code instructions, by overwriting the identified part of the sequence of machine code instructions in the internal memory register with a first set of new machine code instructions, which first set of new machine code instructions corresponds to one or more complete machine code instructions.
   Since the modification of the computer program takes place in between the execution of two machine codes, the modification operation will not affect any progressing execution of a single machine code instruction. Furthermore, by changing the machine code with one or more complete machine code instructions before executing the next machine code instruction in the sequence of machine code instructions, the execution of the computer program will not suffer from the risk of executing a machine code instruction that is only partly changed. Hence it will be possible to make changes to the machine code of a computer program while it is being executed.
   In the event that only small changes needs to be made, for example changing the value of a variable in the computer program, the change will not affect the size of the particular machine code instruction. Similarly, in the event that the changes needed does not change the number of machine code instructions, the size of the program will not change. It will therefore be possible to change the program. Care must be taken by the programmer so that the logical structure of the program remains unaffected.
   A machine code instruction is a string of values provided as one input to the processor core for each processing cycle. The machine code instructions are thus computer program code that is directly executable by the computer processor. A computer program is constituted by a body of machine code instructions, and different sequences of the machine code instructions in the body may be executed, depending on the structure of the program and input during execution. Hence not all machine code instructions in a computer program are necessarily executed. The method according to the invention however, is able to make changes to machine code instructions that are incorporated into the sequence of machine code instructions that is executed, and hence a changed machine code instruction may be executed without causing failure.

A computer processor or processor core may be multi-tasking, wherein the computer processor or core simultaneously maintain one or more computer processes active. Each processing core executes only one machine code instruction from only one computer process per processing cycle. When multi-tasking the processor core alternates between executing the different computer processes. According to a preferred embodiment of the invention the changes to the computer program is controlled by a computer process being executed on the same processor core as the computer program. Hence it is ensured that a machine code instruction of the computer program will not be executed at the same time as the machine code instruction is changed.

A computer system may comprise many different kinds of memories, such as memory registers in direct communication with a processor, data busses, and long term memory storage, such as hard disks. At a given point of time a computer program may exists in one or more of the different memories of the computer. Preferably the method comprises overwriting the machine code instructions of the computer program in all computer memories in which it exists.

A processor may comprise one or more processor cores. Each processing core is designed to process one machine code instruction per processing cycle. A new processing cycle is declared in the processor core by the reception of a clock signal from the computer clock, hence different processor cores or other computer components, such as memories, will function synchronously.

A program counter indicates the internal memory address of the next machine code instruction to be executed within a sequence of machine code instructions. The address is normally incremented by one at the end of a processing cycle, so that the program counter points at the address of the next machine code instruction in the internal memory. Depending on the program the sequence of program instructions to be executed in a processing thread may be stored in the memory in a different order, wherein the program counter may be modified with a different value. This happens for example when the program is entering or leaving a subroutine, or in the event that a jump instruction to another part of the computer program is executed.

The part of the computer program that is to be changed may be identified by use of any known method, or of a method that will be known in the future. One identification method comprises compiling the new computer program into machine code form and comparing the machine code of the new computer program with the machine code of the old computer program. Preferably the method also comprises identifying subroutines, and comparing the new and the old computer programs subroutine by subroutine. Preferably the method also comprises indicating the memory address of the identified part or parts that are to be changed.

According to one embodiment the invention comprises overwriting the identified part with at least a first jump instruction concluding the first set of new machine code instructions, which jump instruction identifies the next machine code instruction to be executed within the computer program. A jump instruction induces a modification of the program counter to point at the address location of the next machine code instruction to be executed. In this case, the jump instruction identifies the next machine code instruction to be executed within the execution path of the computer program. By the last command of the first set defining the next machine code instruction to be executed in the computer program, the first set of new machine code instructions does not need to fit exactly into the memory space occupied by the old machine code instructions. Hence it is possible to overwrite the old machine code with new machine code having a different memory size than the old machine code. In the event that the new machine code occupies less space than the old machine code, some of the old code will simply be excluded from the executable parts of the computer program. Preferably, the identified part constitutes a complete subroutine or function, wherein it is ensured that there are no jump commands elsewhere in the program that directs the processor to execute a machine instruction in an excluded part of the program, since in general all subroutines and functions are called by directing the processor to execute the foremost machine code instruction of the subroutine or function.

According to one embodiment the invention comprises changing the computer program by writing a second set of new machine code instructions to an unengaged memory location of the internal memory register, and adapting the first jump instruction of the first set of machine code instructions to identify at least one machine code instruction of the second set of machine code instructions as the next machine code instruction to be executed. Since the second set is written into an unengaged portion of the internal memory it may be of any size regardless of the size of the old computer program. Hence it is possible to incorporate a set of new machine code instructions that is larger than the group of old machine code instructions that is to be changed. Preferably the second set is written into a memory address being in the vicinity of the old program, such as at the end of, before, or inside an unengaged part of the old computer program. Preferably, the second set comprises one or more complete machine code instructions, in analogy with the first set.

An unengaged portion of the memory is a portion that may lie inside a program or between programs, but which is not referenced by any programmed or automatic, executable jump commands. The unengaged portion is therefore inaccessible and excluded from being executed, until incorporated by the inclusion of the first set and said first jump command to the second set. Hence it is possible to write machine code instructions to the second set at any desired rate of writing, and without the need to write complete machine code instructions before continuing with the execution of the computer program, until the moment the second set becomes incorporated into the computer program.

According to one embodiment the invention comprises writing new machine code instructions to the second set of machine code instructions, and writing machine code instructions corresponding to the machine code instructions overwritten by the first set of machine code instructions to the second set of machine code instructions. Hence no machine code instructions will be lost by the overwriting of the identified part with the first set of machine code instructions.

According to one embodiment the computer comprises a stack memory adapted for storing temporary processing information, and the invention comprises writing machine code instructions to the second set, which machine code instructions induces the computer to store the memory address to the second set and to remove the memory address to the second set from the stack, and writing a machine code instruction to the second set, which machine code instruction induces the computer to rewrite the memory address to the second set onto the stack. Variables and other processing information are stored on the stack. When calling the second set the address to the second set is stored onto the stack as well. Since the stack is accessed top-down, the presence of the second set address will change the correct access to the stack information. By removing the stack address and storing it elsewhere, the same address to the information on the stack as before the second set was called becomes valid. Hence the second set will be executed in the same context and with the same variables as the execution of the part of the computer program substituted with the second set.

According to one embodiment the invention comprises writing at least one, second jump instruction concluding the second set of machine code instructions, which second jump instruction identifies the next machine code instruction to be executed as a machine code instruction located within the first computer program but outside the second set. Hence the second set is fully incorporated into the computer program, since execution of the computer program will continue with the indicated machine code instruction when the execution reaches the end of the second set. Preferably, the second set is a subroutine or function, and the second jump command is an end command returning the execution to the machine code instruction calling the subroutine to which the second set belongs.

According to one embodiment the invention comprises writing the second set of machine code instructions to the unengaged memory location of the internal memory register with a computer process having lower processing priority than the execution of the sequence of machine instructions. Thus the writing of machine code instructions to the second set does not disturb the execution of the computer program to any detrimental degree.

According to one embodiment the invention comprises writing the second set of machine code instructions to the unengaged memory location of the internal memory register with a processor core different from the processor core executing the sequence of machine code instructions of the computer program. Thus the writing of new machine code instructions to the second set does not disturb the execution of the computer program to any detrimental degree, since the second set of machine code instructions may be written by the second processor core simultaneously with the execution of the computer program by the first processor core.

According to one embodiment the invention comprises receiving a notice identifying a first group of machine code instructions, which group comprises at least one machine code instruction that is to be changed, and writing a second set of machine code instructions to said unengaged memory location of the internal memory register, wherein the second set of machine code instructions contains both unchanged and changed machine code instructions corresponding to the identified, first group of machine code instructions. By grouping machine code instructions, which are both to be changed and remain unchanged, and writing them to the second set, it is possible to optimize the performance of the invention. The internal memory consumption for the new, changed computer program depend on the amount of unengaged memory introduced in the program, which will increase by using large groups. On the other hand the disturbance of the execution of the computer program while it is being changed will decrease, since less time will be consumed for overwriting machine code instructions inside the program. Also, the performance of the execution of the program may be affected by the location of the machine code instructions in the internal memory, which will depend on the number, location and size of grouped machine instructions. Hence by using large groups the functioning and performance of the new, patched program can be maintained or even increased.

According to one embodiment of the invention comprises the group of machine instructions comprises a complete subroutine or function. When compiling a program the machine codes constituting a subroutine or function are optimized in respect of performance. By changing a group of machine code instructions constituting an entire subroutine or function the changed second set will be optimized as well. Furthermore, by the original groupings of the machine instructions the logical structure of the computer program is retained as much as possible, which will also increase the performance of the changed computer program. Yet another advantage is that the memory location containing the first group of machine instructions becomes unengaged as soon as the second set of machine instructions corresponding to the first group is fully incorporated into the computer program. The unengaged memory of the first group may then be reused for new machine code instructions.

According to one embodiment the invention comprises overwriting call instructions to a subroutine or function constituting a first group of machine instructions, with a first set comprising a new call instruction to the second set corresponding to the first group. Hence the second set becomes incorporated in the computer program and the memory previously occupied by the first group becomes completely unengaged.

According to one embodiment the invention comprises overwriting a section of the first group of machine code instruction with the first set of machine code instructions, so that the second set of machine code instructions is incorporated into the computer program, and so that at least a portion of the internal memory storing the first group becomes unengaged. By overwriting the first group with a first set of instructions including a jump instruction to the second set, the size of the first set of instructions may be smaller than the size of the first group that is to be changed. Hence, the time to overwrite the first group will be small, causing less disturbance to the execution of the computer program. Furthermore, a portion of the memory storing the first group will become unengaged.

Preferably the first set comprises at the most twenty code machine instructions, more preferably no more than ten machine code instructions, and most preferably no more than five machine code instructions. Preferably the invention comprises overwriting the section of the first group of machine code instructions with a jump instruction identifying at least one machine code instruction of the second set of machine code instructions. Hence the overwriting of the first group will be very quick and will not disturb the execution of the computer program. Furthermore, a large portion of the internal memory used for storing the first group becomes unengaged by the program. According to one embodiment the invention comprises overwriting the identified part with a first set of machine code instructions with a computer process having higher processing priority than the execution of the sequence of machine code instructions. In this way it is ensured that the execution of the computer program will not be resumed in the middle of the overwriting of a machine code in the computer program. According to the invention it is furthermore ensured that the first set is complete before continuing the execution of the computer program. In one embodiment the processing priority is transferred to a second, computer control program, which is performing the invention.

According to one embodiment of the invention the computer comprises a stack memory adapted for storing temporary processing information, and the invention further comprises identifying the memory addresses of the identified part of the first computer program, checking the stack for return addresses to the identified part of the first computer program, and avoiding overwriting the identified part if there are any return addresses to any memory location of the identified part of the first computer program. If a machine instruction of the identified part has called a subroutine, a return address to the machine instruction of the identified part will be stored in the stack. By checking that no return addresses to the identified part are present on the stack, and avoiding overwriting the identified part if there are any return addresses to the identified part present it is ensured that the identified part will not be overwritten if there is a subroutines active that will return the program counter to the identified part after being completed. Otherwise it may happen that, upon completion of the subroutine, the program counter is returned to the already changed and possibly overwritten identified part, wherein the program may crash since it is returned into the wrong subroutine.

According to one embodiment the invention comprises overwriting the identified part with a first set of machine code instructions with the same processor core as is executing the sequence of machine code instructions of the computer program. By letting the processor core that is executing the computer program perform the overwriting of the identified part of the computer program it is ensured that the execution of the computer program is not continued during the overwriting of the computer program. This since it is not possible for the processor core to continue the execution of the computer program and the overwriting of the computer program at the same time.

According to one embodiment the invention comprises overwriting the identified part of the computer program with at the most ten machine code instructions before resuming the execution of the computer program. In one embodiment the invention comprises overwriting the identified part of the computer program with a first set of machine code instructions consisting of one jump instruction only. Thus the overwriting of the identified part of the computer program will have a small impact on the execution of the computer program, which is important in sensitive applications.

According to one embodiment of the invention the computer program is adapted for controlling an industrial process. Preferably the computer program is adapted for real-time control of the industrial process. An industrial process is very expensive or dangerous to shut down, and in case of real-time programs it may also be difficult to restart the process. Hence, these are applications for which an upgrade of the computer program by the patching methods according to the prior art is very difficult.

Furthermore, a real-time program may end up in an erroneous state, depending on the history of the system, wherein it is desirable to debug the program. However, it is not possible to turn the program off in order to insert information extraction instructions, since turning the program off will also end the erroneous state, which might not be possible to recreate. In one embodiment the invention therefore comprises writing machine code instructions to the first computer program for extracting execution processing information. By including instructions for extracting information, the error may be found and the computer program may be debugged or corrected.

According to one embodiment the invention comprises keeping record of previous changes to the program, and using the information from previous changes when incorporating new changes. in this way the control method according to the invention may be optimized.

According to one embodiment the invention comprises simulation of the desired changes to the computer program before concluding the changes. Thus errors that may lead to a shut down of the execution of the computer program may be found prior to overwriting any or some parts of the computer program.

### DESCRIPTION OF THE DRAWINGS

The invention is now to described as a non-limiting example of the invention with reference to the attached drawings.

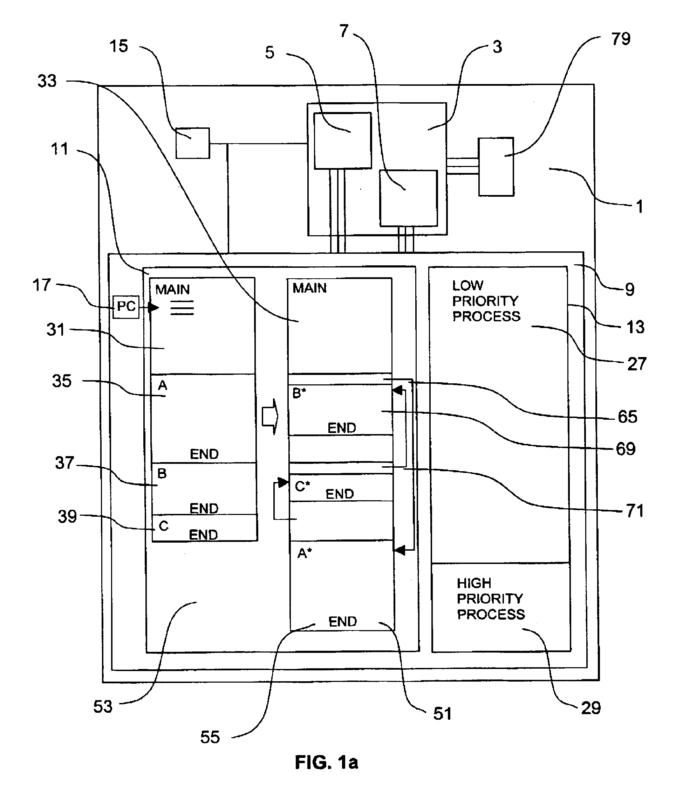

- Fig. 1a: shows a computer system, a computer control pro- gram and a computer readable medium in accordance with one example of the invention.

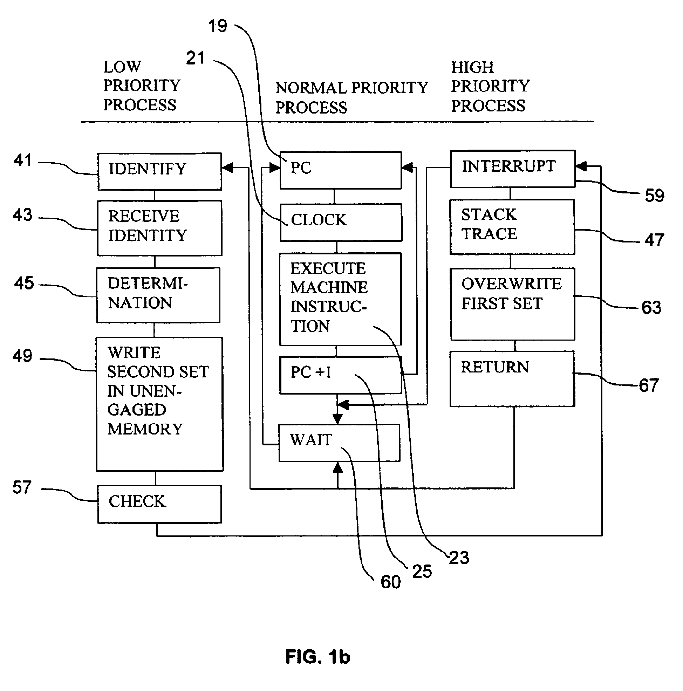

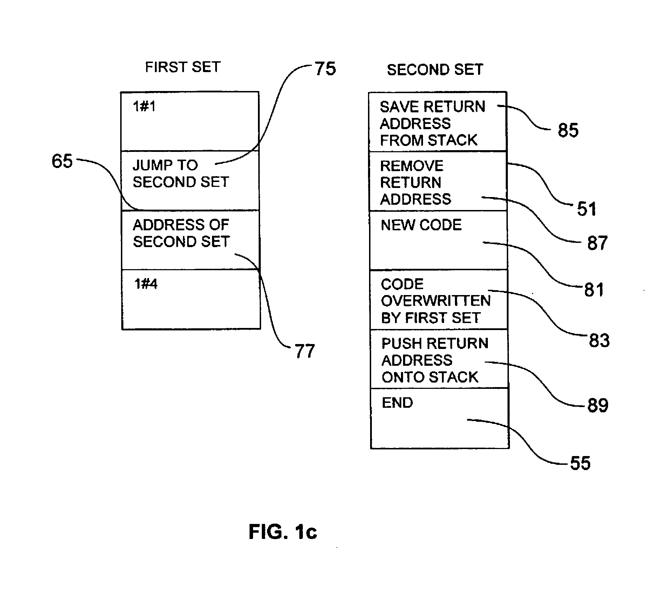

- Fig. 1 b: shows a method of controlling the computer in fig. 1a in accordance with one example of the invention.

### DETAILED DESCRIPTION

In fig. 1a one example of a computer system comprising a computer 1 is shown, and in fig. 1b one example of a method according to the invention is shown.

The computer 1 comprises a computer processor 3 having a first processor core 5 and a second processor core 7. The computer further comprises a computer readable medium in the form of an internal memory register 9. The internal memory register 9 is adapted to store computer programs, in this case a first computer program 11, and a second computer control program 13 in accordance with the invention. The computer programs 11, 13 comprise machine code instructions, wherein the internal memory register is adapted to store the machine code instructions. The internal memory register 9 is further adapted to be in communication with the computer processor 3, so that the processor 3 may read and execute the computer programs. The computer further comprises a computer clock 15, adapted to generate a clock signal for controlling the computer processor, and a program counter 17, adapted point out the machine code instruction that is to be executed.

Each processor core 5, 7 is adapted to execute a computer program by executing a respective machine code instruction per processing cycle. A machine code instruction is a string of values provided as one input to the processor core for each processing cycle. The machine code instructions are thus computer program code that is directly executable by the computer processor. In this example the first processor core 5 is adapted to execute the first computer program 11 and the second computer control program 13 in combination through multi-tasking, wherein the computer core simultaneously maintain the two computer programs active, while the second processor core 7 is adapted to execute the second control program 13.

The computer readable medium comprising the computer control program according to the invention is not necessarily an internal memory, but may comprise many different kinds of memories, such as long-term memory storage, such as hard disks, or portable memories such as DVD or flash-memories.

The computer clock is adapted to declare a new processing cycle by emitting a clock signal to the processor cores and to the internal memory registers. Upon receiving the clock signal from the computer clock, the internal memory register will communicate the machine code instruction pointed out by the program counter 17 to the respective computer processor core 5, 7, which core in turn will execute the machine code instruction received. The program counter points out the machine code instruction by indicating the internal memory address of the machine code instruction.

One example of a method according to the invention performed on the computer system in fig. 1a is shown in fig. 1b. The method comprises controlling the computer 1 to execute a sequence of the machine code instructions of the computer programs. Below the method is only described for the processing of the first computer program 11 on the first processor core 5, but the method is similar for the processing of the second computer control program on processor cores 5 and 7.

For each processor core and each processing cycle the method comprises a first step 19 comprising indicating with the program counter 17 a machine code instruction to be executed. In a second step 21 the method comprises receiving a clock signal from said computer clock 15. In a third step the method comprises executing the machine code instruction indicated by the program counter 17 upon reception of the clock signal. In a fourth step 25 the method comprises modifying the program counter 17 to identify the next machine code instruction in the sequence of machine code instructions, that is to be executed. The method is then repeated with the first step 19, until the computer program is ended or interrupted.

In order to make changes to the first computer program 11, without shutting down the execution of the first computer program 11, the method according to the invention comprises receiving a notice identifying a part of the first computer program that is to be changed, and changing the identified part by overwriting the identified part, in between the execution of two consecutive machine code instructions of the first computer program, with new machine code corresponding to one or more complete machine code instructions. Since the modification of the computer program takes place in between the execution of two machine codes, the modification operation will not affect any progressing execution of a single machine code instruction. Furthermore, by changing the machine code with one or more complete machine code instructions before executing the next machine code instruction in the sequence of machine code instructions, the execution of the computer program will not suffer from the risk of executing a machine code instruction that is only partly changed. Hence it will be possible to make changes to the machine code of a computer program while it is being executed.

In the following the method will be described in more detail and with reference to fig. 1a and fig. 1b in combination.

In order to make changes to the first computer program 11 in an efficient and flexible manner, the computer control program 13 in accordance with the invention comprises a low priority section 27, the functions of which are described in fig. 1b as the low priority process, and a high priority section 29, the functions of which are described in fig. 1b as the high priority process. The first computer program 11 is in turn executed as a normal priority process.

In a multi-tasking environment, such as for the first core 5, a normal priority process will allow another normal process equal or near equal access to the processor core. Hence both processes will be executed. The first computer program will therefore allow sharing of the processor core 5. A low priority process also allowed to share the processor, but will take up less time on the processor in comparison to the normal priority process. When running a low priority process simultaneously with a normal priority process it is ensured that the normal priority process will be disturbed to a much lesser degree than when running two normal processes. A high priority process is a process, which do not allow sharing of the processor core. Hence the high priority process according to the invention will interrupt the execution of the first computer program, and will in turn not be interrupted by any other person.

In fig. 1a the first program 11 is shown unchanged 31, and also in a changed form 33, received after the changes made in accordance with the invention. The unchanged 31 form of the first program 11 comprises in this example a main routine and three subroutines denoted A, B and C, and denoted with the reference numbers 35, 37 and 39, respectively.

In this example, the low priority section 27 of the second computer control program comprises an identification step 41, in which the part or parts of the first computer program 11 that is to be changed is identified. In this example, when it is desired to make changes to a program, the programmer rewrites the previous program with the compiler previously used to create the first program. The new program is compiled and the new program is used for identifying the new machine codes by comparing it with the previous program 11. The identification may also be performed by any other known method, or by a method that will be known in the future.

In this example the method comprises identifying a first group 35 of machine instructions, comprising at least one machine code instruction that is to be changed. In this example the first group 25 comprises both machine code instructions that are to be changed and machine code instructions that are to remain unchanged. In this example the first group comprises the entire subroutine A. By changing a complete group of machine codes instructions instead of a plurality of single machine code instructions, the changing operation may be optimized as well as the processing of the first computer program after the change is complete, since the performance of the execution of the first computer program is dependent on the location of the machine code instruction in the memory. The method also comprises identifying a second group 37 of machine instructions, corresponding to subroutine B, and a third group 39, corresponding to subroutine C. It is advantageous, but not necessary, that the groups are constituted by entire subroutines or functions.

In a reception step 43, information on the identified part or parts of the first program that is to be changed, along with information on what changes to make, is received from, in this example, the identification step 31. In another example the information may instead be received from a compiler directly, in which compiler the changes has been made by a programmer in for example a high level language. In this example the method comprises receiving a notice identifying the first group 35 of machine code instructions, and a notice identifying the second group 37 of machine code instructions. Hence the method comprises receiving information of at least two groups 35, 37 of machine code instructions, each comprising at least one machine code instruction that is to be changed.

The method further comprises a determination step 45, in which it is determined which group of machine code instructions to change next. In this example the method comprises determining to change the largest group of machine code instructions, in this example group 35, corresponding to subroutine A. The order in which to make the changes will affect the final size of the changed computer program 33. In this example the largest group is selected to be changed first, since this will allow writing of the second, largest group in the memory location of the first group, as will be evident later. However, a more refined method for evaluating group sizes so that they fit into the memory space of previous groups may also be performed.

In a low priority process writing step 49, the method comprises changing the computer program by writing a second set 51 of new machine code instructions 81, shown in fig. 1c, to an unengaged memory location 53 of the internal memory register 9. In this example the second set 51 of machine code instructions contains both unchanged and changed machine code instructions corresponding to the identified, first group 35 of machine code instructions, that is corresponding to the changed form of subroutine A, here denoted by A*.

In this example the method further comprises writing new machine code instructions 81 to the second set of machine code instructions corresponding to the desired changes to the computer program. The method further comprises writing machine code instructions 83 corresponding to the machine code instructions overwritten by the first set 65 of machine code instructions to the second set of machine code instructions. Hence no machine code instructions will be lost, unless of course removal of a machine code instruction is desired.

The computer comprises a stack memory 79 adapted for storing temporary processing information. According to this example of the invention the method comprises writing machine code instructions 85 to the second set, which machine code instructions induces the computer to store the memory address to the second set from the stack. The method further comprises writing machine code instructions 87 to the second set, which machine code instructions 87 induces the computer to remove the memory address to the second set from the stack 79. When calling the second set an address to the second set will be stored in the stack 79. Since local variables are also stored in the stack the address will change the order of the variables if the address remains on the stack. By removing the address and storing the address elsewhere, the execution of the second set will remain unaffected and without error. The method also comprises writing a machine code instruction 89 to the second set, which machine code instruction induces the computer to rewrite the return memory address to the second set onto the stack 79, after execution of the machine codes constituting the changed subroutine A*.

The method according to the invention further comprises writing at least one, second jump instruction 55 to the second set 51 of machine code instructions. The second jump instruction 55 identifies the next machine code instruction to be executed as a machine code instruction located within the first computer program 11 but outside the second set 51. In this example the second, jump instruction 55 is an end instruction, wherein the program counter is returned to its value it had when calling the subroutine A, or in this case the return address as mention above.

In this example the second set of machine code instructions is written to the unengaged memory location of the internal memory register with a computer process having lower processing priority than the execution of the sequence of machine instructions. In this example the second set of machine code instructions is written to the unengaged memory location of the internal memory register with a computer processor core different from the processor core executing the sequence of machine code instructions of the computer program. Hence the execution of the first computer program will continue virtually unaffected by the writing of the second set 51, which may contain large numbers of machine code instructions.

In an optional check step 57, the method comprises checking the second set for errors and/or performing a simulation execution of the second set. Hence it is ensured that the computer program 11 will not crash due to unexpected errors introduced by the second set 51. After the check is complete the low priority section 27 of the computer control program 13 is concluded for the first turn, and control is passed to the high priority section 29 of the computer control program.

In an interruption step 59 the method comprises initiating the high priority process according to the invention and the subsequent temporary interruption of the execution of the first computer program 11, so that the execution of the first computer program moves to a wait step 60. The computer program 11 is not interrupted so that the execution terminates, but only so that no machine code instructions of the first computer program 11 will be executed as long as the high priority process is running. Furthermore the high priority process is executed on the first computer core 5, which is the same processor core as is executing the sequence of machine code instructions of the computer program. Hence the high priority process will be performed in between the execution of two subsequent machine code instructions of the first computer program 11.

The computer comprises a stack memory 79 adapted for storing temporary processing information. In this example the method comprises a stack tracing step 47, in which the method comprises identifying the memory addresses of the identified part 35 of the first computer program 11, checking the stack 79 for return addresses to the identified part 35 of the first computer program 11, and avoiding overwriting the identified part 35 if there are any return addresses to any memory location of the identified part 35 of the first computer program 11. If a machine instruction of the identified part has called a subroutine, a return address to the machine instruction of the identified part will be stored in the stack 79. By checking that no return addresses are present on the stack, and avoiding overwriting the identified part if there are any return addresses to the identified part present it is ensured that no parts of the program are overwritten if there are other parts dependent on these parts. Otherwise it may happen that a machine instruction in the identified part calls a subroutine, after which the identified part is changed and possibly overwritten by another subroutine, after which the execution returns to the identified part, wherein the program may crash since it is returned into the wrong subroutine.

In an overwriting step 63 the method comprises overwriting the identified part, in this case the first group 35, corresponding to subroutine A, with a first set 65 of machine code instructions. In this case the first set 65 is written with a computer process having higher processing priority than the execution of the sequence of machine code instructions, and with the same processor core 5 as is executing the sequence of machine code instructions of the computer program. Hence the first set 65 is written in between the execution of two subsequent machine code instructions of the first computer program 11.

The method further comprises overwriting the identified part with at least a first jump instruction 75 in the first set 65 of new machine code instructions, which jump instruction 75 identifies the next machine code instruction to be executed within the computer program by inducing a modification of the program counter 17. In this example the first jump instruction 75 of the first set 65 of machine code instructions is adapted to identify at least one machine code instruction of the second set 51 of machine code instructions as the next machine code instruction to be executed. In this case the jump instruction of the first set 65 identifies the first machine code instruction of the second set 51. The first set 65 also comprises an address instruction 77 for allowing a return to the location of the address instruction 77 after execution of the second set.

Furthermore the first set 65 of machine code instructions is written over a section of the first group 35 of machine code instruction, in this example over the first lines of group 35. Hence when subroutine A is called at a later execution of the first computer program 11, the jump instruction will direct the program counter 17 to the modified second set 51 corresponding to subroutine A*. Hence the modified subroutine A* is executed instead of the old subroutine A.

In this example the method further comprises overwriting the identified part of the computer program with at the most ten machine code instructions, in this example with only two machine code instructions, namely the jump instruction and the address instruction. Hence the first group 35 is overwritten with the first set 65 so that the second set 51 of machine code instructions is incorporated into the computer program, and so that at least a portion of the internal memory storing the first group 51 becomes unengaged. Furthermore, by writing only a small number of machine code instructions, the time for writing the instructions decreases, wherein the processing of the computer program 11 is returned more quickly.

In a final, return step 67 of the high priority process, the method comprises returning to executing the first computer program, and also returning to executing the low priority process once again if more changes are to be made.

Returning to the low priority process the identification 41 and receiving steps 43 now identifies the second group 37, corresponding to subroutine B, as the largest group of machine code instructions to be changed.

In this example the first computer program is an embedded real-time computer program adapted for controlling an industrial process. While executing the computer program 11 the computer 1 receives input from the industrial process, wherein the input affect the execution of the computer program. It may then happen that the execution of the computer program ends in a state, which is erroneous and difficult to reproduce. In order to debug the computer program it may be necessary to extract information from the program. However, in order to extract information it is necessary that the program include machine instructions to this effect. Furthermore, it is not possible to debug the program at some other location, or to rewrite the program and run it anew, since the error depend on the history of the execution and the industrial process.

According to the invention the method therefore comprises writing machine code instructions to the first computer program for extracting execution processing information. Hence the computer program may be debugged in an efficient manner.

The invention is not limited to the example shown, but may be varied within the framework of the following claims, as is readily perceived by the man skilled in the art.

## Claims

1. A method for controlling a computer (1) to execute and change a computer program (11, 13, 33) comprising machine code instructions, the computer (1) comprising a computer processor (3) having at least one processor core (5, 7), each processor core (5, 7) being adapted to execute a respective machine code instruction per processing cycle, a stack memory (79) adapted to store temporary processing information, an internal memory (9) adapted to store the machine code instructions and to be in communication with the computer processor (3), and a computer clock (15) adapted to generate a clock signal for controlling the computer processor (3), wherein the method for executing the computer program (11, 13, 33) comprises controlling the computer (1) to execute a sequence of the machine code instructions by, for each processor core (5, 7) and each processing cycle:
- indicating with a program counter (17) a machine code instruction to be executed,
- receiving a clock signal from said computer clock (15),
- executing the indicated machine code instruction upon reception of the clock signal, and
- modifying the program counter (17) to identify the next machine code instruction in the sequence of machine code instructions, that is to be executed,
wherein the method for changing the computer program (11, 13, 33) comprises:
- receiving a notice identifying at least one part of the sequence of machine code instructions that is to be changed,
- changing the identified part of the sequence of machine code instructions, in between the execution of two consecutive machine code instructions of the sequence of machine code instructions, by overwriting the identified part of the sequence of machine code instructions in the internal memory (9) with a first set of new machine code instructions (65) comprising at least a first jump instruction (75) concluding the first set of new machine code instructions (65), which jump instruction (75) identifies the next machine code instruction to be executed within the computer program (11, 13, 33) by inducing a modification of the program counter (17), wherein the first set of new machine code instructions (65) corresponds to one or more complete machine code instructions,
- changing the computer program (11, 13, 33) by writing a second set of new machine code instructions (51) to an unengaged memory location of the internal memory (9), being a location which is not referenced by programmed or automatic executable jump commands of said computer program and being therefore inaccessible and excluded from being executed by the program, and
- adapting the first jump instruction (75) of the first set of machine code instructions (65) to identify at least one machine code instruction of the second set of machine code instructions (51) as the next machine code instruction to be executed, **characterized in that:**
said second set of machine code instructions (51) induces the computer (1) to store the memory address to the second set elsewhere, and to remove the memory address to the second set from the stark (79), which machine code instructions (51) after execution induces the computer (1) to rewrite the memory address to the second set onto the stack (79).

2. A method according to claim 1, wherein the method comprises:
- writing new machine code instructions to the second set of machine code instructions (51), and
- writing machine code instructions corresponding to the machine code instructions overwritten by the first set of machine code instructions (65) to the second set of machine code instructions (51).

3. A method according to claim 1 or 2, wherein the method comprises:
- writing at least one, second jump instruction to the second set of machine code instructions (51), which second jump instruction identifies the next machine code instruction to be executed as a machine code instruction located within the first computer program (11, 13, 33) but outside the second set (51).

4. A method according to any of the previous claims, wherein the method comprises:
- writing the second set of machine code instructions (51) to the unengaged memory location of the internal memory (9) with a computer process having lower processing priority than the execution of the sequence of machine instructions.

5. A method according to any of the previous claims, wherein the method comprises:
- writing the second set of machine code instructions (51) to the unengaged memory location of the infernal memory (9) with a processor core (5, 7) different from the processor core (5, 7) executing the sequence of machine code instructions of the computer program (11, 13, 33).

6. A method according to any of the previous claims, wherein the method comprises:
- receiving a notice identifying a first group of machine code instructions, which group comprises at least one machine code instruction that is to be changed, and
- writing a second set of machine code instructions (51) to said unengaged memory location of the internal memory (9), wherein the second set of machine code instructions (51) contains both the unchanged part of the first group of machine code instructions and the changed part of the machine code instructions.

7. A method according to claim 6, wherein the method comprises:
- overwriting a section of the first group of machine code instruction with the first set of machine code instructions (65), so that the second set of machine code instructions (51) is incorporated into the computer program (11, 13, 33), and so that at least a portion of the internal memory (9) storing the first group becomes unengaged.

8. A method according to any of the previous claims, wherein the computer (1) comprises a stack memory (79) adapted for storing temporary processing information, and the method comprises:
- identifying the memory addresses of the identified part of the first computer program (11),
- checking the stack (79) for return addresses to the identified part of the first computer program (11), and
- avoiding overwriting the identified part if there are any return addresses to any memory location of the identified part of the first computer program (11).

9. A method according to any of the previous claims, wherein the method comprises:
- overwriting the identified part with a first set of machine code instructions (65) with a computer process having higher processing priority than the execution of the sequence of machine code instructions.

10. A method according to any of the previous claims, wherein the method comprises:
- overwriting the identified part with a first set of machine code instructions (65) with the same processor core (5, 7) as is executing the sequence of machine code instructions of the computer program (11, 13, 33).

11. A method according to claim 9 or 10, wherein the method comprises:
overwriting the identified part of the computer program (11, 13, 33) with at the most ten machine code instructions before resuming the execution of the computer program (11, 13, 33).

12. A method according to any of the previous claims, wherein the method comprises
- writing machine code instructions to the first computer program (11) for extracting execution processing information.

13. A computer (1) adapted to execute and change a computer program (11, 13, 33) comprising machine code instructions, the computer (1) comprising a computer processor (3) having at least one processor core (5, 7), each processor core (55, 7) being adapted to execute a respective machine code instruction per processing cycle, an internal memory (9) adapted to store the machine code instructions and to be in communication with the computer processor (3), a computer clock (15) adapted to generate a clock signal for controlling the computer processor (3), and a program counter (17) adapted to store at least one memory address of the internal memories,
the computer (1) being adapted to execute a sequence of the machine code instructions by, for at least one processor core (5, 7) and for each processing cycle:
- storing the memory address of a machine code instruction to be executed in the program counter (17),
- receiving a clock signal in said processor core (5, 7) from said computer clock (15),
- executing the machine code instruction stored at the memory location indicated in the program counter (17) with the processor core (5, 7) upon reception of the clock signal, and
- modifying the memory address stored in the program counter (17) into a new memory address identifying the next machine, code instruction in the sequence of machine code instructions,
that is to be executed,
wherein the computer (1) further being adapted to change the computer program (11, 13, 33) by means of:
- receiving a notice identifying at least one part of the sequence of machine code instructions that is to be changed,
- changing the identified part of the sequence of machine code instructions, in between the execution of two consecutive machine code instructions of the sequence of machine code instructions, by overwriting the identified part of the sequence of machine code instructions in the internal memory (9) with a first set of new machine code instructions (65) comprising at least a first jump instruction (75) concluding the first set of new machine code instructions (65), which jump instruction identifies the next machine code instruction to be executed within the computer program (11, 13, 33) by inducing a modification of the program counter (17), which wherein the first set of new machine code instructions (65) corresponds to one or more complete machine code instructions,
- changing the computer program (11, 13, 33) by writing a second set of new machine code instructions (51) to an unengaged memory location of the internal memory (9), being a location which is not referenced by programmed or automatic executable jump commands of said computer program and being therefore inaccessible and excluded from being executed by the program, and
- adapting the first jump instruction (75) of the first set of machine code instructions (65) to identify at least one machine code instruction of the second set of machine code instructions (51) as the next machine code instruction to be executed, **characterized in that:**
said second set of machine code instructions (51) induces the computer (1) to store the memory address to the second set elsewhere, and to remove the memory address to the second set from the stack (79), which machine code instructions (51) after execution induces the computer (1) to rewrite the memory, address to the second set onto the stack (79).

14. A computer (1) according to claim 13, **characterized in that** the computer (1) is further adapted to perform any of the steps in claims 2-12.

## Patentansprüche

1. Verfahren zum Steuern eines Computers (1) zum Ausführen und Ändern eines Computerprogramms (11,13, 33), das Maschinencodebefehle enthält, wobei der Computer (1) einen Computerprozessor (3), der mindestens einen Prozessorkern (5, 7) aufweist, wobei jeder Prozessorkern (5, 7) zur Ausführung eines jeweiligen Maschinencodebefehls je Verarbeitungszyklus ausgelegt ist, einen Stapelspeicher (79), der zur Speicherung von temporären Verarbeitungsinformationen ausgelegt ist, einen internen Speicher (9), der zum Speichern der Maschinencodebefehle und für eine Kommunikation mit dem Computerprozessor (3) ausgelegt ist, und einen Computer-Taktgeber (15) umfasst, der zur Erzeugung eines Taktsignals zum Steuern des Computerprozessors (3) ausgelegt ist, wobei das Verfahren zum Ausführen des Computerprogramms (11, 13, 33) das Steuern des Computers (1) hinsichtlich der Ausführung einer Sequenz der Maschinencodebefehle umfasst, indem für jeden Prozessorkern (5, 7) und für jeden Verarbeitungszyklus folgendes ausgeführt wird,:
- Anzeigen eines auszuführenden Maschinencodebefehls mittels eines Programmzählers (17),
- Empfangen eines Taktsignals von dem Computer-Taktgeber (15),
- Ausführen des angezeigten Maschinencodebefehls auf den Empfang des Taktsignals hin, und
- Modifizieren des Programmzählers (17) zum Identifizieren des nächsten Maschinencodebefehls in der auszuführenden Sequenz von Maschinencodebefehlen, wobei das Verfahren zum Ändern des Computerprogramms (11, 13, 33) aufweist:
- Empfangen eines Hinweises, der mindestens einen Teil der Sequenz von Maschinencodebefehlen identifiziert, der zu ändern ist,
- Ändern des identifizierten Teils der Sequenz von Maschinencodebefehlen zwischen der Ausführung von zwei aufeinanderfolgenden Maschinencodebefehlen der Sequenz von Maschinencodebefehlen, indem der identifizierte Teil der Sequenz von Maschinencodebefehlen in dem internen Speicher (9) durch einen ersten Satz von neuen Maschinencodebefehlen (65) überschrieben wird, der mindestens einen ersten Sprungbefehl (75) enthält, der den ersten Satz von neuen Maschinencodebefehlen (65) abschließt, wobei der Sprungbefehl (75) den nächsten Maschinencodebefehl identifiziert, der innerhalb des Computerprogramms (11,13, 33) auszuführen ist, indem eine Modifikation des Programmzählers (17) hervorgerufen wird, wobei der erste Satz von neuen Maschinencodebefehlen (65) einem oder mehreren vollständigen Maschinencodebefehlen entspricht,
- Ändern des Computerprogramms (11, 13, 33) durch Schreiben eines zweiten Satzes von neuen Maschinencodebefehlen (51) in eine nicht belegte Speicherstelle des internen Speichers (9), die eine Stelle ist, auf die nicht durch programmierte oder automatisch abarbeitbare Sprungbefehle des Computerprogramms zugegriffen wird und die daher unzugänglich und von einer Abarbeitung durch das Programm ausgenommen ist, und
- Anpassen des ersten Sprungbefehls (75) des ersten Satzes von Maschinencodebefehlen (65) zum Identifizieren mindestens eines Maschinencodebefehls des zweiten Satzes von Maschinencodebefehlen (51) als der nächste auszuführende Maschinencodebefehl,
**dadurch gekennzeichnet, dass:**
der zweite Satz von Maschinencodebefehlen (51) den Computer (1) dazu veranlasst, die Speicheradresse für den zweiten Satz anderswo zu speichern und die Speicheradresse des zweiten Satzes von dem Stapel (79) zu entfernen, wobei diese Maschinencodebefehle (51) nach der Ausführung den Computer (1) dazu veranlassen, die Speicheradresse zu dem bzw. für den zweiten Satz auf den Stapel (79) zu (über-) schreiben.

2. Verfahren nach Anspruch 1, wobei das Verfahren umfasst:
- Schreiben von neuen Maschinencodebefehlen in den zweiten Satz von Maschinencodebefehlen (51), und
- Schreiben von Maschinencodebefehlen, die den durch den ersten Satz von Maschinencodebefehlen (65) überschriebenen Maschinencodebefehlen entsprechen, zu dem zweiten Satz von Maschinencodebefehlen (51).

3. Verfahren nach Anspruch 1 oder 2, wobei das Verfahren umfasst:
- Schreiben mindestens eines zweiten Sprungbefehls zu dem zweiten Satz von Maschinencodebefehlen (51), wobei dieser zweite Sprungbefehl den nächsten Maschinencodebefehl identifiziert, der als ein Maschinencodebefehl auszuführen ist, der innerhalb des ersten Computerprogramms (11, 13, 33), jedoch außerhalb des zweiten Satzes (51) angeordnet ist.

4. Verfahren nach einem der vorhergehenden Ansprüche, wobei das Verfahren umfasst:
- Schreiben des zweiten Satzes von Maschinencodebefehlen (51) in die nicht belegte Speicherstelle des internen Speichers (9) mittels eines Computerprozesses, der niedrigere Verarbeitungspriorität als die Abarbeitung der Sequenz von Maschinenbefehlen besitzt.

5. Verfahren nach einem der vorhergehenden Ansprüche, wobei das Verfahren umfasst:
- Schreiben des zweiten Satzes von Maschinencodebefehlen (51) in die nicht belegte Speicherstelle des internen Speichers (9) mittels eines Prozessorkerns (5, 7), der sich von dem Prozessorkern (5, 7), der die Sequenz von Maschinencodebefehlen des Computerprogramms (11, 13, 33) ausführt, unterscheidet.

6. Verfahren nach einem der vorhergehenden Ansprüche, wobei das Verfahren umfasst:
- Empfangen einer Mitteilung, die eine erste Gruppe von Maschinencodebefehlen identifiziert, wobei diese Gruppe mindestens einen zu ändernden Maschinencodebefehl enthält, und
- Schreiben eines zweiten Satzes von Maschinencodebefehlen (51) in die nicht belegte Speicherstelle des internen Speichers (9), wobei der zweite Satz von Maschinencodebefehlen (51) sowohl den nicht geänderten Teil der ersten Gruppe von Maschinencodebefehlen als auch den geänderten Teil der Maschinencodebefehle enthält.

7. Verfahren nach Anspruch 6, wobei das Verfahren umfasst:
- Überschreiben eines Abschnitts der ersten Gruppe von Maschinencodebefehlen durch den ersten Satz von Maschinencodebefehlen (65), so dass der zweite Satz von Maschinencodebefehlen (51) in das Computerprogramm (11, 13, 33) eingefügt ist, und derart, dass mindestens ein Abschnitt des internen Speichers (9), der die erste Gruppe speichert, unbelegt bzw. frei wird.

8. Verfahren nach einem der vorhergehenden Ansprüche, wobei der Computer (1) einen Stapelspeicher (79) aufweist, der zum Speichern von temporärer Verarbeitungsinformation ausgelegt ist, und wobei das Verfahren umfasst:
- Identifizieren der Speicheradressen des identifizierten Teils des ersten Computerprogramms (11),
- Prüfen des Stapels (79) hinsichtlich Rückkehradressen zu dem identifizierten Teil des ersten Computerprogramms (11), und
- Vermeiden des Überschreibens des identifizierten Teils, falls irgendwelche Rückkehradressen zu irgendeiner Speicherstelle des identifizierten Teils des ersten Computerprogramms (11) vorhanden sind.

9. Verfahren nach einem der vorhergehenden Ansprüche, wobei das Verfahren umfasst:
- Überschreiben des identifizierten Teils durch einen ersten Satz von Maschinencodebefehlen (65) mittels eines Computerprozesses, der höhere Verarbeitungspriorität als die Abarbeitung der Sequenz von Maschinencodebefehlen besitzt.

10. Verfahren nach einem der vorhergehenden Ansprüche, wobei das Verfahren umfasst:
- Überschreiben des identifizierten Teils durch einen ersten Satz von Maschinencodebefehlen (65) mittels desselben Prozessorkerns (5, 7), der auch die Sequenz von Maschinencodebefehlen des Computerprogramms (11,13, 33) ausführt.

11. Verfahren nach Anspruch 9 oder 10, wobei das Verfahren umfasst:
- Überschreiben des identifizierten Teils des Computerprogramms (11,13, 33) mit maximal zehn Maschinencodebefehlen vor der Wiederaufnahme der Abarbeitung des Computerprogramms (11, 13, 33).

12. Verfahren nach einem der vorhergehenden Ansprüche, wobei das Verfahren umfasst:
- Schreiben von Maschinencodebefehlen in das erste Computerprogramm (11) zum Herausgreifen von Ausführungsverarbeitungsinformationen.

13. Computer (1), der zum Ausführen und Ändern eines Computerprogramms (11, 13, 33), das Maschinencodebefehle umfasst, ausgelegt ist, wobei der Computer (1) einen Computerprozessor (3), der mindestens einen Prozessorkern (5, 7) umfasst, wobei jeder Prozessorkern (5, 7) zur Ausführung eines jeweiligen Maschinencodebefehls je Verarbeitungszyklus ausgelegt ist, einen internen Speicher (9), der zum Speichern der Maschinencodebefehle und für eine Kommunikation mit dem Computerprozessor (3) ausgelegt ist, einen Computer-Taktgeber (15), der zum Erzeugen eines Taktsignals zum Steuern des Computerprozessors (3) ausgelegt ist, und einen Programmzähler (17) enthält, der zum Speichern von mindestens einer Speicheradresse der internen Speicher ausgelegt ist, wobei der Computer (1) zum Ausführen einer Sequenz der Maschinencodebefehle **dadurch** ausgelegt ist, dass für mindestens einen Prozessorkern (5, 7) und für jeden Verarbeitungszyklus folgendes ausgeführt wird:
- Speichern der Speicheradresse eines auszuführenden Maschinencodebefehls in dem Programmzähler (17),
- Empfangen eines Taktsignals in dem Prozessorkern (5, 7) von dem Computer-Taktgeber (15),
- Abarbeiten des Maschinencodebefehls, der in der durch den Programmzähler (17) angezeigten Speicherstelle gespeichert ist, mittels des Prozessorkerns (5, 7) auf den Empfang des Taktsignals hin, und
- Modifizieren der in dem Programmzähler (17) gespeicherten Speicheradresse in eine neue Speicheradresse, die den nächsten auszuführenden Maschinencodebefehl in der Sequenz von Maschinencodebefehlen identifiziert,
wobei der Computer (1) weiterhin dazu ausgelegt ist, das Computerprogramm (11, 13, 33) mit Hilfe der folgenden Schritte zu ändern:
- Empfangen einer Mitteilung, die mindestens einen zu ändernden Teil der Sequenz von Maschinencodebefehlen identifiziert,
- Ändern des identifizierten Teils der Sequenz von Maschinencodebefehlen zwischen der Ausführung von zwei aufeinanderfolgenden Maschinencodebefehlen der Sequenz von Maschinencodebefehlen durch Überschreiben des identifizierten Teils der Sequenz von Maschinencodebefehlen in dem internen Speicher (9) durch einen ersten Satz von neuen Maschinencadebefehlen (65), der mindestens einen ersten Sprungbefehl (75) enthält, der den ersten Satz von neuen Maschinencodebefehlen (65) abschließt, wobei dieser Sprungbefehl den nächsten auszuführenden Maschinencodebefehl innerhalb des Computerprogramms (11, 13, 33) identifiziert, wobei eine Modifikation des Programmzählers (17) hervorgerufen wird, wobei der erste Satz von neuen Maschinencodebefehlen (65) einem oder mehreren vollständigen Maschinencodebefehlen entspricht,
- Ändern des Computerprogramms (11, 13, 33) durch Schreiben eines zweiten Satzes von neuen Maschinencodebefehlen (51) in eine unbelegte Speicherstelle des internen Speichers (9), wobei die Stelle eine Stelle ist, auf die nicht durch programmierte oder automatisch ausführbare Sprungbefehle des Computerprogramms zugegriffen wird und die daher unzugänglich und von einer Abarbeitung durch das Programm ausgeschlossen ist, und
- Adaptieren des ersten Sprungbefehls (75) des ersten Satzes von Maschinencodebefehlen (65) zur Identifizierung von mindestens einem Maschinencodebefehl des zweiten Satzes von Maschinencodebefehlen (51) als der nächste auszuführende Maschinencodebefehl,
**dadurch gekennzeichnet, dass:**
der zweite Satz von Maschinencodebefehlen (51) den Computer (1) dazu veranlasst, die Speicheradresse des zweiten Satzes anderswo zu speichern und die Speicheradresse des zweiten Satzes von dem Stapel (79) zu entfernen, wobei diese Maschinencodebefehle (51) den Computer (1) nach ihrer Ausführung zum (Über-) Schreiben der Speicheradresse zu dem zweiten Satz auf dem Stapel (79) veranlasst.

14. Computer (1) nach Anspruch 13, **dadurch gekennzeichnet, dass** der Computer (1) weiterhin zur Durchführung der jeweiligen Schritte gemäß den Ansprüche 2 bis 12 ausgelegt ist.

## Revendications

1. Procédé de commande d'un ordinateur (1) pour exécuter et modifier un programme d'ordinateur (11, 13, 33) comprenant des instructions de code machine, l'ordinateur (1) comprenant un processeur d'ordinateur (3) comportant au moins un noyau de processeur (5, 7), chaque noyau de processeur (5, 7) étant conçu pour exécuter une instruction de code machine respective par cycle de traitement, une mémoire de pile (79) conçue pour mémoriser des informations de traitement temporaires, une mémoire interne (9) conçue pour mémoriser les instructions de code machine et pour être en communication avec le processeur d'ordinateur (3), et une horloge d'ordinateur (15) conçue pour générer un signal d'horloge pour commander le processeur d'ordinateur (3), dans lequel le procédé pour exécuter le programme d'ordinateur (11, 13, 33) comprend la commande de l'ordinateur (1) pour exécuter une séquence des instructions de code machine en, pour chaque noyau de processeur (5, 7) et chaque cycle de traitement :
- indiquant par un compteur de programme (17) une instruction de code machine à exécuter,
- recevant un signal d'horloge de ladite horloge d'ordinateur (15),
- exécutant l'instruction de code machine indiquée lors de la réception du signal d'horloge, et
- modifiant le compteur de programme (17) pour identifier l'instruction de code machine suivante dans la séquence d'instructions de code machine qui doit être exécutée,
dans lequel le procédé pour modifier le programme d'ordinateur (11, 13, 33) consiste à :
- recevoir une notification identifiant au moins une partie de la séquence d'instructions de code machine qui doit être modifiée,
- modifier la partie identifiée de la séquence d'instructions de code machine, entre l'exécution de deux instructions de code machine consécutives de la séquence d'instructions de code machine, en remplaçant la partie identifiée de la séquence d'instructions de code machine dans la mémoire interne (9) par un premier ensemble de nouvelles instructions de code machine (65) comprenant au moins une première instruction de saut (75) terminant le premier ensemble de nouvelles instructions de code machine (65), laquelle instruction de saut (75) identifie l'instruction de code machine suivante à exécuter dans le programme d'ordinateur (11, 13, 33) en provoquant une modification du compteur de programme (17), dans lequel le premier ensemble de nouvelles instructions de code machine (65) correspond à une ou plusieurs instructions de code machine complètes,
- modifier le programme d'ordinateur (11, 13, 33) en écrivant un deuxième ensemble de nouvelles instructions de code machine (51) à un emplacement de mémoire non occupé de la mémoire interne (9), qui est un emplacement qui n'est pas référencé par des commandes de saut exécutables programmées ou automatiques dudit programme d'ordinateur et qui est par conséquent inaccessible et qui est exclu de l'exécution par le programme, et
- adapter la première instruction de saut (75) du premier ensemble d'instructions de code machine (65) pour identifier au moins une instruction de code machine du deuxième ensemble d'instructions de code machine (51) en tant qu'instruction de code machine suivante à exécuter,
**caractérisé en ce que** :
ledit deuxième ensemble d'instructions de code machine (51) amène l'ordinateur (1) à mémoriser l'adresse de mémoire pour le deuxième ensemble ailleurs, et à retirer l'adresse de mémoire pour le deuxième ensemble de la pile (79), lesquelles instructions de code machine (51), après exécution, amènent l'ordinateur (1) à réécrire l'adresse de mémoire pour le deuxième ensemble dans la pile (79).

2. Procédé selon la revendication 1, dans lequel le procédé consiste à :
- écrire de nouvelles instructions de code machine pour le deuxième ensemble d'instructions de code machine (51), et
- écrire des instructions de code machine correspondant aux instructions de code machine remplacées par le premier ensemble d'instructions de code machine (65) pour le deuxième ensemble d'instructions de code machine (51).

3. Procédé selon la revendication 1 ou 2, dans lequel le procédé consiste à :
- écrire au moins une deuxième instruction de saut pour le deuxième ensemble d'instructions de code machine (51), laquelle deuxième instruction de saut identifie l'instruction de code machine suivante à exécuter en tant qu'instruction de code machine située dans le premier programme d'ordinateur (11, 13, 33) mais en-dehors du deuxième ensemble (51).

4. Procédé selon l'une quelconque des revendications précédentes, dans lequel le procédé consiste à :
- écrire le deuxième ensemble d'instructions de code machine (51) à l'emplacement de mémoire non occupé de la mémoire interne (9) par un processus d'ordinateur ayant une priorité de traitement plus faible que l'exécution de la séquence d'instructions machine.

5. Procédé selon l'une quelconque des revendications précédentes, dans lequel le procédé consiste à :
- écrire le deuxième ensemble d'instructions de code machine (51) à l'emplacement de mémoire non occupé de la mémoire interne (9) par un noyau de processeur (5, 7) différent du noyau de processeur (5, 7) exécutant la séquence d'instructions de code machine du programme d'ordinateur (11, 13, 33).

6. Procédé selon l'une quelconque des revendications précédentes, dans lequel le procédé consiste à :
- recevoir une notification identifiant un premier groupe d'instructions de code machine, lequel groupe comprend au moins une instruction de code machine qui doit être modifiée, et
- écrire un deuxième ensemble d'instructions de code machine (51) audit emplacement de mémoire non occupé de la mémoire interne (9), dans lequel le deuxième ensemble d'instructions de code machine (51) contient à la fois la partie inchangée du premier groupe d'instructions de code machine et la partie modifiée des instructions de code machine.

7. Procédé selon la revendication 6, dans lequel le procédé consiste à :
- remplacer une section du premier groupe d'instructions de code machine par le premier ensemble d'instructions de code machine (65), de sorte que le deuxième ensemble d'instructions de code machine (51) soit incorporé dans le programme d'ordinateur (11, 13, 33), et de sorte qu'au moins une partie de la mémoire interne (9) mémorisant le premier groupe devienne inoccupée.

8. Procédé selon l'une quelconque des revendications précédentes, dans lequel l'ordinateur (1) comprend une mémoire de pile (79) conçue pour mémoriser des informations de traitement temporaires, et le procédé consiste à :
- identifier les adresses de mémoire de la partie identifiée du premier programme d'ordinateur (11),
- rechercher dans la pile (79) des adresses de retour vers la partie identifiée du premier programme d'ordinateur (11), et
- éviter de réécrire la partie identifiée s'il existe des adresses de retour vers un emplacement de mémoire quelconque de la partie identifiée du premier programme d'ordinateur (11).

9. Procédé selon l'une quelconque des revendications précédentes, dans lequel le procédé consiste à :
- remplacer la partie identifiée par un premier ensemble d'instructions de code machine (65) par un processus d'ordinateur ayant une priorité de traitement plus élevée que l'exécution de la séquence d'instructions de code machine.

10. Procédé selon l'une quelconque des revendications précédentes, dans lequel le procédé consiste à :
- remplacer la partie identifiée par un premier ensemble d'instructions de code machine (65) par le même noyau de processeur (5, 7) que celui qui exécute la séquence d'instructions de code machine du programme d'ordinateur (11, 13, 33).

11. Procédé selon la revendication 9 ou 10, dans lequel le procédé consiste à :
remplacer la partie identifiée du programme d'ordinateur (11, 13, 33) par au plus dix instructions de code machine avant de reprendre l'exécution du programme d'ordinateur (11, 13, 33).

12. Procédé selon l'une quelconque des revendications précédentes, dans lequel le procédé consiste à :
- écrire des instructions de code machine dans le premier programme d'ordinateur (11) pour extraire des informations de traitement d'exécution.

13. Ordinateur (1) conçu pour exécuter et modifier un programme d'ordinateur (11, 13, 33) comprenant des instructions de code machine, l'ordinateur (1) comprenant un processeur d'ordinateur (3) comportant au moins un noyau de processeur (5, 7), chaque noyau de processeur (5, 7) étant conçu pour exécuter une instruction de code machine respective par cycle de traitement, une mémoire interne (9) conçue pour mémoriser les instructions de code machine et pour être en communication avec le processeur d'ordinateur (3), une horloge d'ordinateur (15) conçue pour générer un signal d'horloge pour commander le processeur d'ordinateur (3), et un compteur de programme (17) conçu pour mémoriser au moins une adresse de mémoire des mémoires internes,
l'ordinateur (1) étant conçu pour exécuter une séquence des instructions de code machine en, pour au moins un noyau de processeur (5, 7) et chaque cycle de traitement :
- mémorisant l'adresse de mémoire d'une instruction de code machine à exécuter dans le compteur de programme (17),
- recevant un signal d'horloge dans ledit noyau de processeur (5, 7) de ladite horloge d'ordinateur (15),
- exécutant l'instruction de code machine mémorisée à l'emplacement de mémoire indiqué dans le compteur de programme (17) par le noyau de processeur (5, 7) lors de la réception du signal d'horloge, et
- modifiant l'adresse de mémoire mémorisée dans le compteur de programme (17) en une nouvelle adresse de mémoire identifiant l'instruction de code machine suivante dans la séquence d'instructions de code machine qui doit être exécutée,
dans lequel l'ordinateur (1) est en outre conçu pour modifier le programme d'ordinateur (11, 13, 33) en :
- recevant une notification identifiant au moins une partie de la séquence d'instructions de code machine qui doit être modifiée,
- modifiant la partie identifiée de la séquence d'instructions de code machine, entre l'exécution de deux instructions de code machine consécutives de la séquence d'instructions de code machine, en remplaçant la partie identifiée de la séquence d'instructions de code machine dans la mémoire interne (9) par un premier ensemble de nouvelles instructions de code machine (65) comprenant au moins une première instruction de saut (75) terminant le premier ensemble de nouvelles instructions de code machine (65), laquelle instruction de saut identifie l'instruction de code machine suivante à exécuter dans le programme d'ordinateur (11, 13, 33) en provoquant une modification du compteur de programme (17), dans lequel le premier ensemble de nouvelles instructions de code machine (65) correspond à une ou plusieurs instructions de code machine complètes,
- modifiant le programme d'ordinateur (11, 13, 33) en écrivant un deuxième ensemble de nouvelles instructions de code machine (51) à un emplacement de mémoire non occupé de la mémoire interne (9), qui est un emplacement qui n'est pas référencé par des commandes de saut exécutables programmées ou automatiques dudit programme d'ordinateur et qui est par conséquent inaccessible et qui est exclu de l'exécution par le programme, et
- adaptant la première instruction de saut (75) du premier ensemble d'instructions de code machine (65) pour identifier au moins une instruction de code machine du deuxième ensemble d'instructions de code machine (51) en tant qu'instruction de code machine suivante à exécuter,
**caractérisé en ce que :**
ledit deuxième ensemble d'instructions de code machine (51) amène l'ordinateur (1) à mémoriser l'adresse de mémoire pour le deuxième ensemble ailleurs, et à retirer l'adresse de mémoire pour le deuxième ensemble de la pile (79), lesquelles instructions de code machine (51), après exécution, amènent l'ordinateur (1) à réécrire l'adresse de mémoire pour le deuxième ensemble dans la pile (79).

14. Ordinateur (1) selon la revendication 13, **caractérisé en ce que** l'ordinateur (1) est en outre conçu pour effectuer l'une quelconque des étapes des revendications 2 à 12.
